# EUROPÄISCHE PATENTANMELDUNG

(11) **EP 2 590 314 A1**
(43) Veröffentlichungstag der Anmeldung: **08.05.2013**
(21) Anmeldenummer: 11187642.1
(22) Anmeldetag: 03.11.2011
(51) Int. Cl.: H02M 7/49, H02M 1/32

(54) **Umrichtersystem sowie leistungselektronisches System mit solchen Umrichtersystemen**

(71) Anmelder: ABB Technology AG, 8050 Zürich (CH)
(72) Erfinder: Steimer, Peter, 5420 Ehrendingen (CH); Apeldoorn, Oscar, 5426 Lengnau (CH)
(74) Vertreter: ABB Patent Attorneys

(57) **Zusammenfassung**

Es wird Umrichtersystem (1) mit einer Phasenspannungsquelle (2) und mit n Teilumrichtersystemen (3.1, ..., 3.n) angegeben, wobei n ≥ 1 ist und im Falle n=1 das Teilumrichtersystem (3.1) an einem Verbindungspunkt (A) mit der Phasenspannungsquelle (2) verbunden ist und im Falle n>1 die Teilumrichtersysteme (3.1, ..., 3.n) an dem Verbindungspunkt (A) mit der Phasenspannungsquelle (2) verbunden sind. Darüber hinaus ist ein Leistungsschalter (4) seriell zwischen die Phasenspannungsquelle (2) und dem Verbindungspunkt (A) eingeschaltet. Zur schnellen Abschaltung eines Fehlerstromes über ein Teilumrichtersystem (3.1, ... , 3.n) ist ein Unterbrechungselement (5) seriell zwischen die Phasenspannungsquelle (2), dem Leistungsschalter (4) und dem Verbindungspunkt (A) eingeschaltet. Desweiteren wird ein leistungselektronisches System mit m Umrichtersystemen (1) angegeben, wobei m>1 ist.

## Beschreibung

### Technisches Gebiet

Die Erfindung bezieht sich auf das Gebiet der Leistungselektronik. Sie geht aus von einer Umrichtersystem sowie einem leistungselektronischen System mit solchen Umrichtersystemen gemäss dem Oberbegriff der unabhängigen Ansprüche.

### Stand der Technik

Umrichtersysteme werden heute in einer Vielzahl von Anwendungen eingesetzt. Ein in der Spannung besonders einfach zu skalierendes leistungselektronisches System mit Umrichtersystemen ist in der DE 102005040543A1 angegeben. Das leistungselektronische System der DE 102005040543A1 umfasst mindestens zwei Phasenbausteine, wobei jeder Phasenbaustein ein erstes und ein zweites Teilumrichtersystem aufweist. Jedes Teilumrichtersystem umfasst eine Induktivität und dazu in Serie geschaltete n in Serie geschaltete zweipolige Schaltzellen, wobei n ≥ 2 ist und jede Schaltzelle ansteuerbare bidirektionale Leistungshalbleiterschalter mit gesteuerter unidirektionaler Stromführungsrichtung und einen kapazitiven Energiespeicher aufweist. Für jeden Phasenbaustein ist die Induktivität des ersten Teilumrichtersystems seriell mit der Induktivität des zweiten Teilumrichtersystems verbunden. Ferner bildet für jeden Phasenbaustein der Verbindungspunkt der Induktivität des ersten Teilumrichtersystems mit der Induktivität des zweiten Teilumrichtersystems einen Phasenanschluss. An den Phasenanschlüssen ist typischerweise ein elektrisches Wechselspannungsnetz, also jeweils eine Phasenspannungsquelle, oder eine elektrische Last angeschlossen.

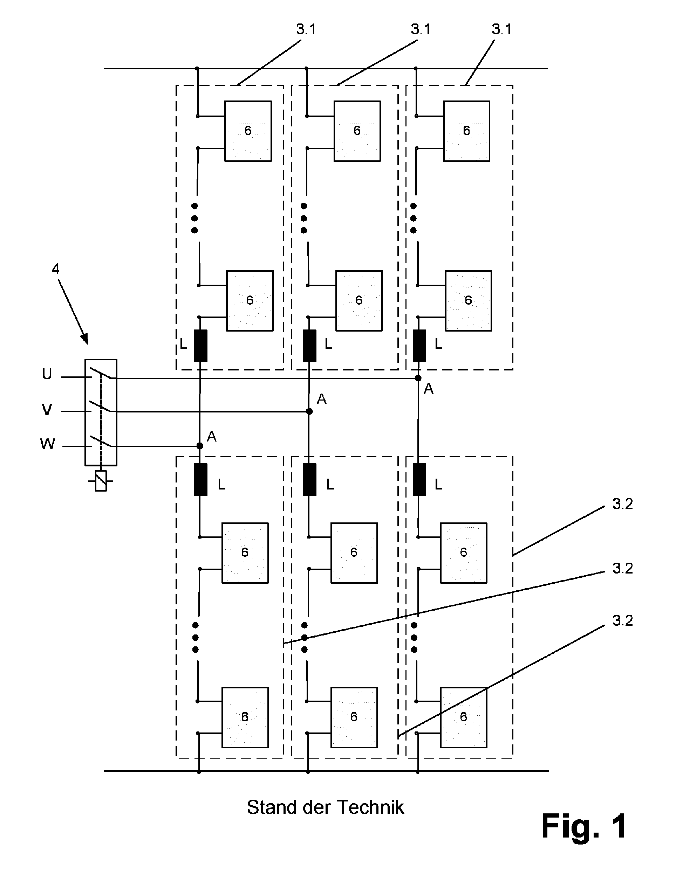

Darüber hinaus ist typischerweise ein Leistungsschalter mit den Phasenanschlüssen verbunden, der dazu dient, ein üblicherweise mit dem leistungselektronischen System verbundenes elektrisches Wechselspannungsnetz oder eine an das leistungselektronische System angeschlossene elektrische Last beispielsweise im Falle eines Fehlers in einem Teilumrichtersystem eines Phasenbausteins oder auch zu Wartungszwecken eines Umrichtersystems abzutrennen. In Fig. 1 ist ein solches leistungselektronisches System nach dem Stand der Technik dargestellt.

Im Falle eines Fehlers in einem Teilumrichtersystem eines Phasenbausteins fliesst der resultierende Fehlerstrom typischerweise über den betroffenen Phasenanschluss vom oder in das elektrisches Wechselspannungsnetz oder von der oder zu der elektrischen Last, bevor das leistungselektronische an den Phasenanschlüssen durch den Leistungsschalter getrennt wird. Bis diese Trennung erfolgt, können die Umrichtersysteme, insbesondere die Bauelemente der Umrichtersysteme, und damit das leistungselektronische System Schaden nehmen, so dass die Umrichtersysteme repariert bzw. gewartet werden müssen und die Verfügbarkeit sinkt.

### Darstellung der Erfindung

Aufgabe der Erfindung ist es deshalb, ein Umrichtersystem anzugeben, bei welchem eine verbesserte Beherrschung eines im Fehlerfall in einem Teilumrichtersystem des Umrichtersystems auftretenden Fehlerstromes möglich ist. Eine weitere Aufgabe der Erfindung ist es, ein leistungselektronisches System mit Umrichtersystemen anzugeben, welches sehr einfach und modular zu realisieren ist.

Diese Aufgaben werden durch die Merkmale des Anspruchs 1 bzw. durch die Merkmale des Anspruchs 9 gelöst. In den abhängigen Ansprüchen sind vorteilhafte Weiterbildungen der Erfindung angegeben.

Das erfindungsgemässe Umrichtersystem umfasst eine Phasenspannungsquelle und allgemein n Teilumrichtersystemen, wobei n ≥ 1 ist und im Falle n=1 das Teilumrichtersystem an einem Verbindungspunkt mit der Phasenspannungsquelle verbunden ist und im Falle n>1 die Teilumrichtersysteme an dem Verbindungspunkt mit der Phasenspannungsquelle verbunden sind. Zudem ist ein Leistungsschalter seriell zwischen die Phasenspannungsquelle und dem Verbindungspunkt eingeschaltet. Erfindungsgemäss ist nun ein Unterbrechungselement seriell zwischen die Phasenspannungsquelle, dem Leistungsschalter und dem Verbindungspunkt eingeschaltet, welches es erlaubt, einen auftretenden und über ein Teilumrichtersystem fliessenden Fehlerstrom, beispielsweise aufgrund eines Fehlers in einem Teilumrichtersystem, schnell und sicher zu unterbrechen, bevor der Leistungsschalter die Phasenspannungsquelle trennt. Somit lässt sich ein im Fehlerfall beispielsweise in einem Teilumrichtersystem auftretender Fehlerstrom sehr einfach beherrschen, bevor der Leistungsschalter die schlussendliche Abtrennung vornimmt.

Das erfindungsgemässe leistungselektronische System umfasst m der vorstehend genannten erfindungsgemässen Umrichtersysteme, wobei m>1 ist und die Phasenspannungsquellen der Umrichtersysteme auf einem festlegbaren Spannungspotential liegen, um vorteilhaft einen gemeinsamen und definierten Potentialbezugspunkt der Phasenspannungsquellen zu erreichen. Da für jedes Umrichtersystem zwischen der Phasenspannungsquelle, dem Leistungsschalter und dem Verbindungspunkt das Unterbrechungselement seriell eingeschaltet ist, besteht die Möglichkeit, einen nur über ein Teilumrichtersystem eines Umrichtersystems oder mehrere Teilumrichtersysteme eines Umrichtersystems fliessenden Fehlerstrom zu unterbrechen, ohne dass die Unterbrechungselemente der anderen Umrichtersysteme eine Unterbrechung durchführen müssen. Ein Weiterbetrieb des leistungselektronischen Systems mit den nicht vom Fehlerstrom betroffenen Umrichtersystemen ist damit möglich. Natürlich besteht immer die Möglichkeit, eine komplette Trennung mittels aller Unterbrechungselementen durchzuführen und somit einen sicheren Zustand des gesamten leistungselektronischen Systems herbeizuführen. Insgesamt lässt sich demnach ein im Fehlerfall in einem Teilumrichtersystem oder in mehreren Teilumrichtersystemen eines oder mehrerer Umrichtersysteme auftretender Fehlerstrom auch sehr einfach beherrschen, bevor der Leistungsschalter die finale Abtrennung durchführt.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform eines leistungselektronischen Systems nach dem Stand der Technik,
- Fig. 2: eine erste Ausführungsform eines erfindungsgemässen Umrichtersystems,
- Fig. 3: eine zweite Ausführungsform des erfindungsgemässen Umrichtersystems,
- Fig. 4: eine erste Ausführungsform eines erfindungsgemässen leistungselektronischen Systems,
- Fig. 5: eine zweite Ausführungsform eines erfindungsgemässen leistungselektronischen Systems,
- Fig. 6: eine dritte Ausführungsform eines erfindungsgemässen leistungselektronischen Systems,
- Fig. 7: eine erste Ausführungsform einer Schaltzelle des erfindungsgemässen Umrichtersystems und
- Fig. 8: eine zweite Ausführungsform einer Schaltzelle des erfindungsgemässen Umrichtersystems.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

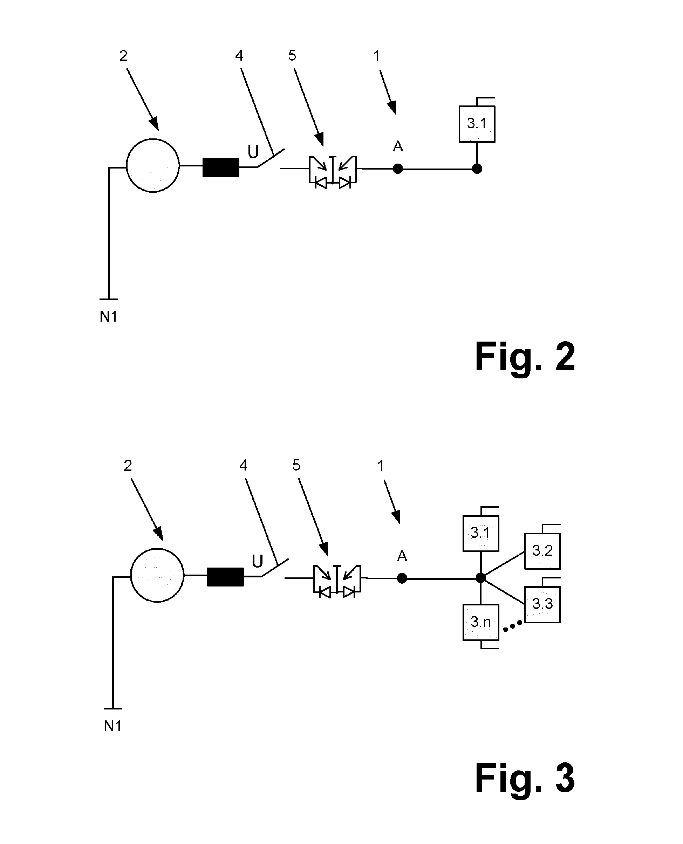

In Fig.1 ist die eingangs bereits erwähnte Ausführungsform eines Umrichtersystems nach dem Stand der Technik dargestellt. Desweiteren zeigt nun Fig. 2 eine erste Ausführungsform des erfindungsgemässen Umrichtersystems 1. In Fig. 3 ist eine zweite Ausführungsform des erfindungsgemässen Umrichtersystems 1 angegeben. Das Umrichtersystem 1 nach Fig. 2 und Fig. 3 umfasst eine Phasenspannungsquelle 2 und allgemein n Teilumrichtersystemen 3.1, ..., 3.n, wobei n ≥ 1 ist. Im Falle n=1, wie beispielhaft in Fig. 2 gezeigt, ist das Teilumrichtersystem 3 an einem Verbindungspunkt A mit der Phasenspannungsquelle 2 verbunden. Im Falle n>1, wie beispielhaft in Fig. 3 gezeigt, sind die Teilumrichtersysteme 3.1, ..., 3.n dann an dem Verbindungspunkt A mit der Phasenspannungsquelle 2 verbunden. Weiterhin ist gemäss Fig. 2 und Fig. 3 ein Leistungsschalter 4 seriell zwischen die Phasenspannungsquelle und dem Verbindungspunkt eingeschaltet.

Nach der Erfindung ist nun allgemein ein Unterbrechungselement 5 seriell zwischen die Phasenspannungsquelle 2, dem Leistungsschalter 4 und dem Verbindungspunkt A eingeschaltet, welches Unterbrechungselement 5 es erlaubt, einen auftretenden und über ein Teilumrichtersystem 3.1, ..., 3.n fliessenden Fehlerstrom, beispielsweise aufgrund eines Fehlers in einem Teilumrichtersystem 3.1, ..., 3.n, schnell und sicher zu unterbrechen, bevor der Leistungsschalter 5 die Phasenspannungsquelle 2 trennt. Demzufolge lässt sich ein im Fehlerfall beispielsweise in einem Teilumrichtersystem 3.1, ..., 3.n auftretender Fehlerstrom sehr einfach beherrschen, bevor der Leistungsschalter 4 die Abtrennung der Phasenspannungsquelle 2 vornimmt. Der Leistungsschalter 4 ist vorzugsweise als mechanischer Schalter ausgeführt.

Bevorzugterweise ist das Unterbrechungselement 5 durch einen ansteuerbaren Schalter mit bidirektionaler Stromführungsrichtung gebildet, so dass vorteilhaft Fehlerströme unterschiedlicher Polarität unterbrochen werden können.

Der ansteuerbare Schalter mit bidirektionaler Stromführungsrichtung kann als mechanischer Schalter mit pyrotechnischer Auslösung ausgeführt sein. Wie in Fig. 2 und Fig. 3 beispielhaft gezeigt, kann der ansteuerbare Schalter mit bidirektionaler Stromführungsrichtung aber auch durch zwei antiparallel geschaltete ansteuerbare bidirektionale Leistungshalbleiterschalter mit gesteuerter unidirektionaler Stromführungsrichtung gebildet sein. Der jeweilige ansteuerbare bidirektionale Leistungshalbleiterschalter mit gesteuerter unidirektionaler Stromführungsrichtung wiederum kann einen Bipolartransistor mit isoliert angeordneter Gateelektrode und zu dem Bipolartransistor eine antiparallel geschaltete Diode aufweisen. Alternativ ist es auch denkbar, dass der jeweilige ansteuerbare bidirektionale Leistungshalbleiterschalter einen Leistungs-MOSFET mit dazu antiparallel geschalteter Diode aufweist.

Wie in Fig. 3 beispielhaft gezeigt, ist es als weitere Alternative auch möglich, dass der jeweilige ansteuerbare bidirektionale Leistungshalbleiterschalter mit gesteuerter unidirektionaler Stromführungsrichtung einen rückwärtssperrenden Thyristor aufweist. Dabei sind jegliche dem Fachmann bekannte Arten von Thyristoren denkbar, insbesondere auch integrierte Thyristoren mit kommutierter Ansteuerelektrode (IGCT - Integrated Gate Commutated Thyristor). Da lediglich Thyristoren verwendet werden, ist diese Ausführungsform des Unterbrechungselementes 5 denkbar einfach aufgebaut, somit sehr robust und äusserst kostengünstig zu realisieren. Denkbar ist es ferner auch, dass der jeweilige ansteuerbare bidirektionale Leistungshalbleiterschalter mit gesteuerter unidirektionaler Stromführungsrichtung einen symmetrischen Bipolartransistor mit isoliert angeordneter Gateelektrode (IGBT - Insulated Gate Bipolar Transistor) aufweist.

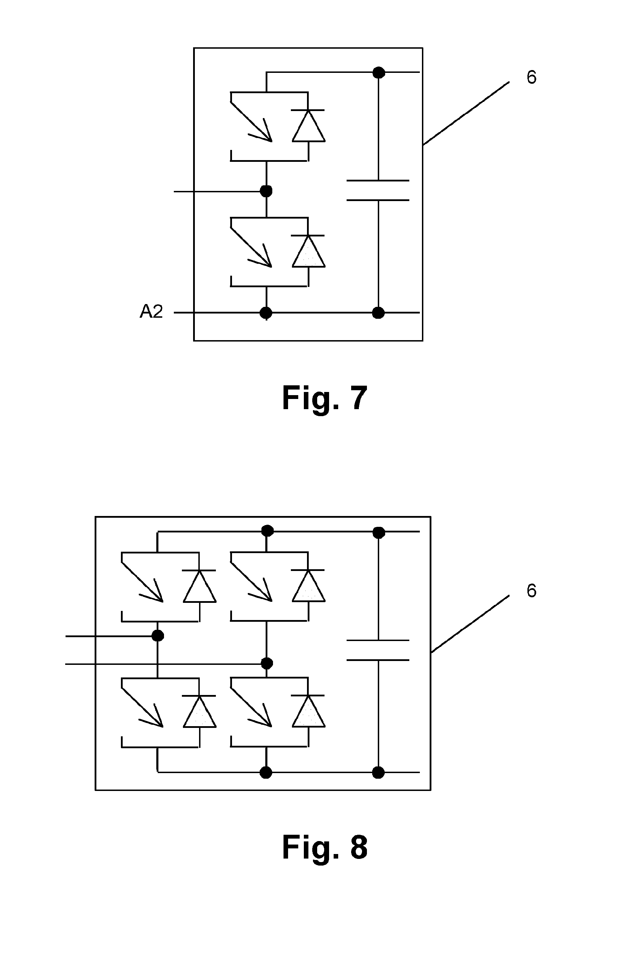

Das Teilumrichtersystem 3.1, ..., 3.n umfasst eine Induktivität L und dazu in Serie geschaltete p in Serie geschaltete zweipolige Schaltzellen 6, wobei p ≥ 2 ist und jede Schaltzelle 6 ansteuerbare bidirektionale Leistungshalbleiterschalter mit gesteuerter unidirektionaler Stromführungsrichtung und einen kapazitiven Energiespeicher aufweist. Das Teilumrichtersystem 3.1, ..., 3.n ist mit der Induktivität L mit dem Verbindungspunkt A verbunden. Der jeweilige ansteuerbare bidirektionale Leistungshalbleiterschalter mit gesteuerter unidirektionaler Stromführungsrichtung der Schaltzellen 6 des Teilumrichtersystems 3.1, ..., 3.n ist insbesondere als Abschaltthyristor (GTO - Gate Turn-Off Thyristor) oder als integrierter Thyristor mit kommutierter Ansteuerelektrode (IGCT - Integrated Gate Commutated Thyristor) mit jeweils einer antiparallel geschalteten Diode ausgebildet. Es ist aber auch denkbar, einen ansteuerbaren bidirektionalen Leistungshalbleiterschalter mit gesteuerter unidirektionaler Stromführungsrichtung beispielsweise als Leistungs-MOSFET mit zusätzlich antiparallel geschalteter Diode oder als Bipolartransistor mit isoliert angeordneter Gateelektrode (IGBT) mit zusätzlich antiparallel geschalteter Diode auszubilden. In Fig. 7 ist beispielhaft eine erste Ausführungsform einer Schaltzelle des erfindungsgemässen Umrichtersystems dargestellt, wobei die ansteuerbaren bidirektionalen Leistungshalbleiterschalter mit gesteuerter unidirektionaler Stromführungsrichtung in Halbbrückenschaltung verschaltet sind und der kapazitive Energiespeicher parallel zu der Halbbrückenschaltung geschaltet ist. Desweiteren ist in Fig. 8 beispielhaft eine zweite Ausführungsform einer Schaltzelle des erfindungsgemässen Umrichtersystems dargestellt, wobei die ansteuerbaren bidirektionalen Leistungshalbleiterschaltern mit gesteuerter unidirektionaler Stromführungsrichtung in Vollbrückenschaltung verschaltet sind und der kapazitive Energiespeicher parallel zu der Vollbrückenschaltung geschaltet ist.

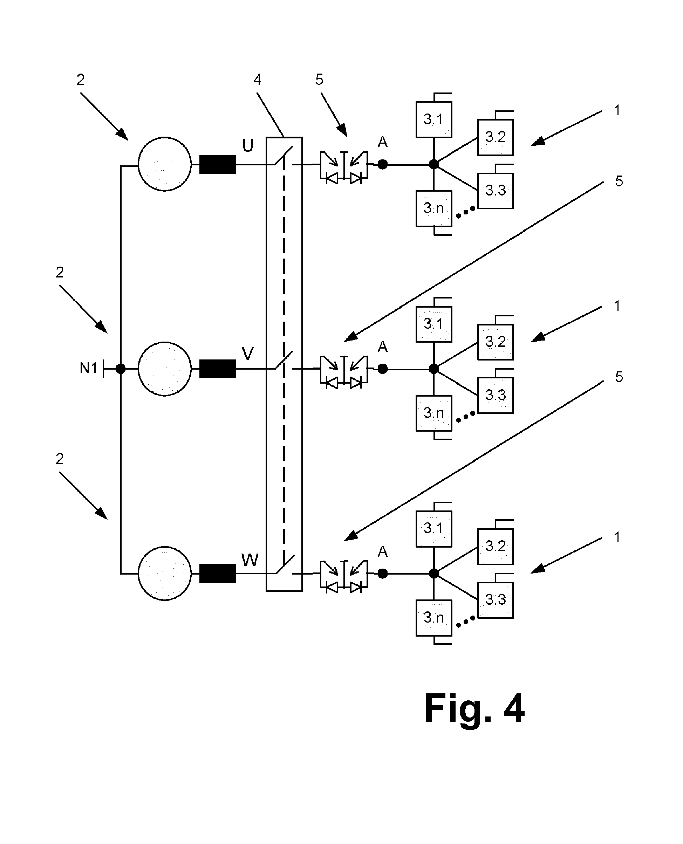

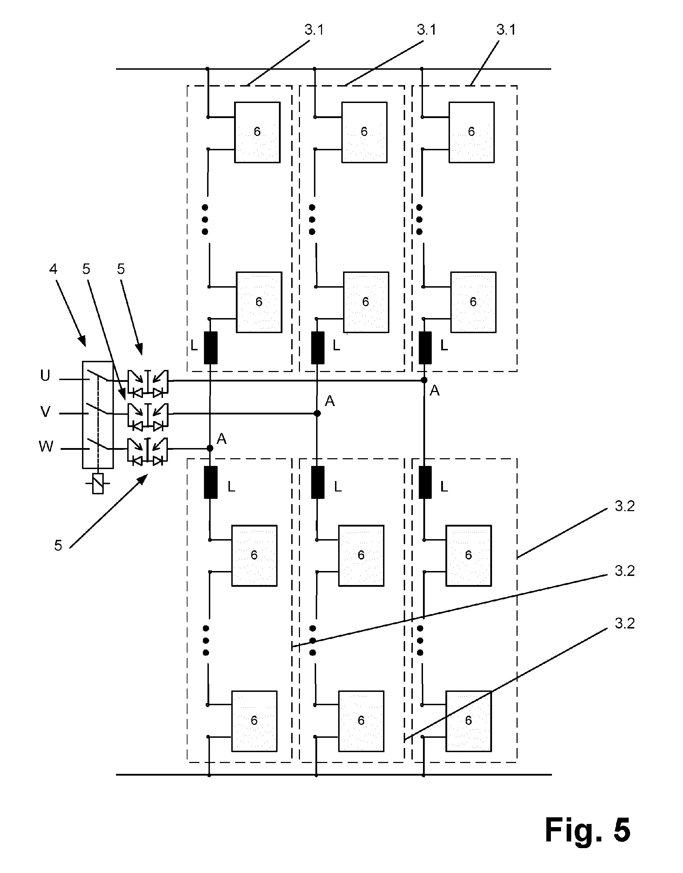

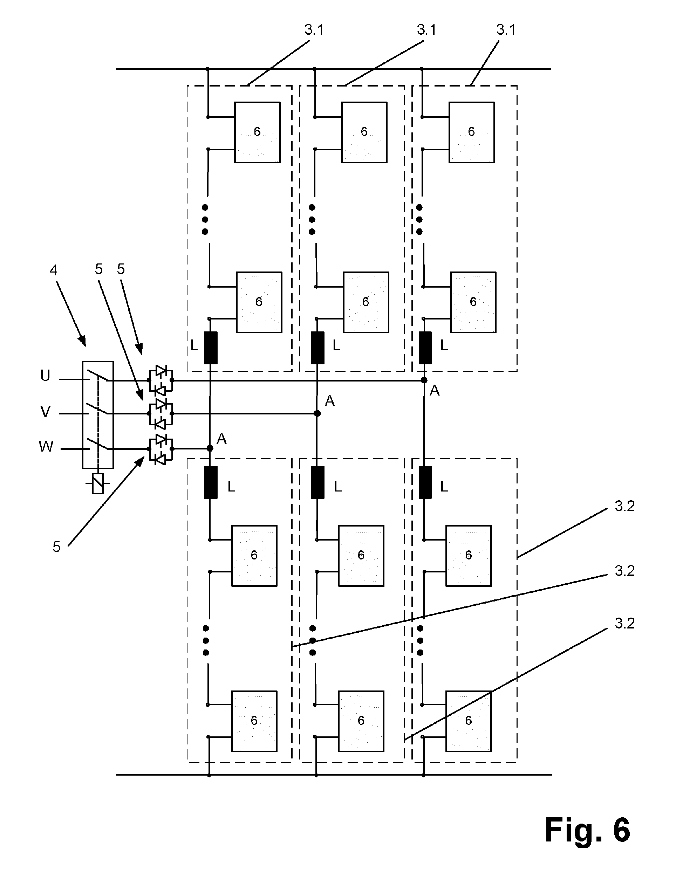

In Fig. 4 ist eine erste Ausführungsform eines erfindungsgemässen leistungselektronischen Systems dargestellt. Ferner ist in Fig. 5 zweite Ausführungsform des erfindungsgemässen leistungselektronischen Systems gezeigt. Fig. 6 zeigt weiterhin eine dritte Ausführungsform des erfindungsgemässen leistungselektronischen Systems. Allgemein umfasst das erfindungsgemässe leistungselektronische System m der vorstehend genannten erfindungsgemässen Umrichtersysteme 1, wobei m>1 ist und die Phasenspannungsquellen 2 der Umrichtersysteme 1 auf einem festlegbaren Spannungspotential N1 liegen, wodurch vorteilhaft ein gemeinsamer und definierter Potentialbezugspunkt der Phasenspannungsquellen 2 erreichbar ist. In Fig. 5 und Fig. 6 sind beispielhaft m = 3 Umrichtersysteme 1 dargestellt, wobei jedes Umrichtersystem 1 n = 2 Teilumrichtersysteme 3.1, 3.2 aufweist. Der Übersichtlichkeit halber sind die Phasenspannungsquellen 2 der Umrichtersysteme 1 nicht dargestellt. Das erfindungsgemässe leistungselektronische System ist damit denkbar einfach aufgebaut, modular und bezüglich der elektrischen Leistung besonders einfach skalierbar. Da für jedes Umrichtersystem 1 zwischen der Phasenspannungsquelle 2, dem Leistungsschalter 4 und dem Verbindungspunkt A das Unterbrechungselement 5 seriell eingeschaltet ist , besteht die Möglichkeit, einen lediglich über ein Teilumrichtersystem 3.1, ..., 3.n eines Umrichtersystems 1 oder mehrere Teilumrichtersysteme 3.1, ..., 3.n eines Umrichtersystems 1 fliessenden Fehlerstrom zu unterbrechen, ohne dass die Unterbrechungselemente 5 der anderen Umrichtersysteme 1 eine Unterbrechung durchführen müssen. Damit ist ein Weiterbetrieb des leistungselektronischen Systems mit den nicht vom Fehlerstrom betroffenen Umrichtersystemen 1 möglich. Es versteht sich, dass natürlich immer die Möglichkeit besteht, eine komplette Trennung mittels aller Unterbrechungselemente 5 durchzuführen und somit das gesamte leistungselektronische System einen sicheren Zustand zu überführen. Insgesamt lässt sich demnach ein im Fehlerfall in einem Teilumrichtersystem 3.1, ..., 3.n oder in mehreren Teilumrichtersystemen 3.1, ..., 3.n eines oder mehrerer Umrichtersysteme 1 auftretender Fehlerstrom auch sehr einfach beherrschen, bevor der Leistungsschalter 4 die finale Abtrennung durchführt.

### Bezugszeichenliste

- 1: Umrichtersystem
- 2: Phasenspannungsquelle
- 3.1, ...3.n: Teilumrichtersystem
- 4: Leistungsschalter
- 5: Unterbrechungselement
- 6: Schaltzelle
- A: Verbindungspunkt
- L: Induktivität
- N 1: festlegbares Potential

## Patentansprüche

1. Umrichtersystem (1) mit einer PhasenPhasenspannungsquelle (2) und mit n Teilumrichtersystemen (3.1, ..., 3.n), wobei n ≥ 1 ist und im Falle n=1 das Teilumrichtersystem (3.1) an einem Verbindungspunkt (A) mit der Phasenspannungsquelle (2) verbunden ist und im Falle n>1 die Teilumrichtersysteme (3.1, ..., 3.n) an dem Verbindungspunkt (A) mit der Phasenspannungsquelle (2) verbunden sind, und wobei ein Leistungsschalter (4) seriell zwischen die Phasenspannungsquelle (2) und dem Verbindungspunkt (A) eingeschaltet ist,
**dadurch gekennzeichnet,**
**dass** ein Unterbrechungselement (5) seriell zwischen die Phasenspannungsquelle (2), dem Leistungsschalter (4) und dem Verbindungspunkt (A) eingeschaltet ist.

2. Umrichtersystem (1) nach Anspruch 1, **dadurch gekennzeichnet, dass** das Unterbrechungselement (5) durch einen ansteuerbaren Schalter mit bidirektionaler Stromführungsrichtung gebildet ist.

3. Umrichtersystem (1) nach Anspruch 2, **dadurch gekennzeichnet, dass** der ansteuerbare Schalter mit bidirektionaler Stromführungsrichtung durch zwei antiparallel geschaltete ansteuerbare bidirektionale Leistungshalbleiterschalter mit gesteuerter unidirektionaler Stromführungsrichtung gebildet ist.

4. Umrichtersystem (1) nach Anspruch 3, **dadurch gekennzeichnet, dass** der jeweilige ansteuerbare bidirektionale Leistungshalbleiterschalter mit gesteuerter unidirektionaler Stromführungsrichtung einen Bipolartransistor mit isoliert angeordneter Gateelektrode und zu dem Bipolartransistor eine antiparallel geschaltete Diode aufweist, oder
dass der jeweilige ansteuerbare bidirektionale Leistungshalbleiterschalter einen Leistungs-MOSFET mit dazu antiparallel geschalteter Diode aufweist.

5. Umrichtersystem (1) nach Anspruch 3, **dadurch gekennzeichnet, dass** der jeweilige ansteuerbare bidirektionale Leistungshalbleiterschalter mit gesteuerter unidirektionaler Stromführungsrichtung einen rückwärtssperrenden Thyristor aufweist.

6. Umrichtersystem (1) nach Anspruch 2, **dadurch gekennzeichnet, dass** der ansteuerbare Schalter mit bidirektionaler Stromführungsrichtung als mechanischer Schalter mit pyrotechnischer Auslösung ausgeführt ist.

7. Umrichtersystem (1) nach einem der Ansprüche 1 bis 6, **dadurch gekennzeichnet, dass** der Leistungsschalter (5) als mechanischer Schalter ausgeführt ist.

8. Umrichtersystem (1) nach einem der Ansprüche 1 bis 7, **dadurch gekennzeichnet, dass** das Teilumrichtersystem (3.1, ..., 3.n) eine Induktivität (L) und dazu in Serie geschaltete p in Serie geschaltete zweipolige Schaltzellen (6) umfasst, p ≥ 2 ist und jede Schaltzelle (6) ansteuerbare bidirektionale Leistungshalbleiterschalter mit gesteuerter unidirektionaler Stromführungsrichtung und einen kapazitiven Energiespeicher aufweist, wobei das Teilumrichtersystem (3.1, ..., 3.n) mit der Induktivität (L) mit dem Verbindungspunkt (A) verbunden ist.

9. Leistungselektronisches System, **dadurch gekennzeichnet, dass** m Umrichtersysteme (1) nach einem der Ansprüche 1 bis 8 vorgesehen sind, wobei m>1 ist, und
dass die Phasenspannungsquellen (2) der Umrichtersysteme (1) auf einem festlegbaren Spannungspotential (N1) liegen.
